Europäisches Patentamt

European Patent Office

Office européen des brevets

(19)

(11) Publication number: **0 255 281**
**A2**

(12) # EUROPEAN PATENT APPLICATION

(21) Application number: **87306432.3**

(22) Date of filing: **20.07.87**

(51) Int. Cl.⁴: **F16G 11/12**

(30) Priority: **23.07.86 US 888337**
**19.06.87 US 64248**

(43) Date of publication of application:
**03.02.88 Bulletin 88/05**

(84) Designated Contracting States:
**DE FR GB IT NL**

(71) Applicant: **Skyba, Helmut K.**
**Route 2, Box 330**
**Wild Rose, Wisconsin 54984(US)**

(72) Inventor: **Skyba, Helmut K.**
**Route 2, Box 330**
**Wild Rose, Wisconsin 54984(US)**

(74) Representative: **Adams, William Gordon et al**
**RAWORTH, MOSS & COOK 36 Sydenham**
**Road**
**Croydon Surrey CR0 2EF(GB)**

(54) **Elastic tie down.**

(57) An elastic tie down comprises an elastic tube (13) that carries a slack rope (9) inside thereof. The tube is crimped directly to the rope, so that pulling the rope ends stretches the tube and imparts elastic qualities to the tie down. In a modified embodiment, an annular insert is placed into the ends of the tube and the rope passes through the insert. The tube and insert are clamped, causing the insert to collapse to grip the rope. The tie down can also include abutments crimped to the rope or knots (11) on the rope for co-operating with the tube ends. Bushings can be provided and can be split and can have inwardly converging surfaces that terminate in grooves. Tension applied to the rope ends causes the abutments to contact the bushing converging surfaces and force the bushings apart and into a tight grip with the tube and with solid rings surrounding the tube over the respective bushings. The rope ends can be provided with hooks (23, 35). The length between the hooks can be adjustable without affecting the elastic properties of the tie-down by a clip (25) that slidably receives the free end of one of the rope ends extending from the tube. The clip also secures the rope end, thereby creating an adjustable sized loop (30) in the rope. A hook (35) is slidably received over the rope in the loop. Sliding the clip along the rope varies the size of the loop and thereby alters the length between the two hooks independently of the tension in the elastic tube.

Fig.2.

## ELASTIC TIE DOWN

This invention relates to elastic tie downs.

Elastic tie downs are restraining devices which yieldably restrain a first member against motion away from a second member. Elastic tie downs, sometimes referred to as shock cords, are in widespread use. Such devices find numerous applications in the automotive, recreational and marine fields for retaining a first member in a desired location relative to a second member.

Typically, prior elastic tie downs each comprise an elongate flexible element with a hook attached to each end. The flexible element is usually a rubber strap of elasticised cord that is stretchable along its full length. Full length elasticity results in a tie down having a restraining force that is dependent on the distance between the hooks. That construction poses certain disadvantages. If the tie down is slightly too long for the application, the tie down will be too limber. The only way to obtain increased tension or restraining force is by stretching the tie down to increase the distance between the hooks. However, such stretching is undesirable because then the distance between the hooks increases even more, and the excess length must be taken up. On the other hand, if the tie down is slightly too short for the application, the tie down must be excessively stretched, which may produce unwanted force in the restrained members. Further, excessive stretching can result in permanent elongation or deformation. In addition, full length elastic material is undesirably expensive. Even if the tie down length between the hooks is correct for the application at hand, the tension produced by that length may be improper. In that case, some way must be found to change either the distance between the restrained members or the overall length of the tie down to obtain the proper tension.

As a result of the length-tension dependency of prior tie downs, a user must buy several sizes for his various applications. Alternatively, he must buy a tie-down that is excessively long for most applications and devise ways of adapting it to applications requiring shorter lengths.

An example of a typical tie down may be seen in US-PS 2,991,524.

From the above it will be appreciated that a need exists for an elastic tie down that produces a restraining force that is independent of the distance between the end hooks.

According to a first aspect of the present invention, there is provided a tie down comprising a flexible rope having first and second ends and defining spaced first and second points therealong, and an elastic sleeve or tube, characterised in that said elastic sleeve or tube is placed over the rope intermediate the ends thereof and conceals the rope first and second points, the tube length being less than the spacing between the rope first and second points to create a rope slack inside the tube, and there being clamp means surrounding the elastic tube near the opposed ends thereof for crimping the tube onto the rope thereby to capture the rope slack between the tube ends and to create said rope first and second ends extending oppositely from the ends of the tube and having sufficient length to afford connection of the rope ends for rope usage, the arrangement being such that applying tension to the rope ends causes tension on the elastic tube to stretch it and thereby impart elastic qualities to the tie down.

According to a second aspect of the present invention, there is provided an elastic tie down comprising a flexible rope having first and second ends and an elastic tube, characterised in that a pair of spaced abutment means is provided on the rope between the two ends, and a pair of longitudinally split annular bushings are placed over the rope between a respective end thereof and the associated abutment means, each bushing having an interior end facing the respective abutment means and defining a passage therethrough that converges from the interior end towards the interior of the bushing, the bushing passage further defining an internal groove adapted to receive the abutment means; said elastic tube being placed over the rope intermediate the rope ends and encapsulating and concealing the bushings and the abutment means, the tube length being less than the spacing between the abutment means to create a rope slack inside the tube; and a pair of rings, one ring being placed over the elastic tube in transverse alignment with each bushing so that when the rope first and second ends are forced apart the abutment means enter the respective bushing converging passages to force the bushings outwardly into tight gripping contact with the elastic tube and the abutment means become seated in the respective bushing internal grooves.

According to a third aspect of the present invention, there is provided an elastic tie down comprising a flexible rope having first and second ends and an elastic tube characterised in that said tube is placed over the rope intermediate the rope ends and the rope comprises a pair of spaced abutment means between its two ends and said elastic tube conceals said abutment means, the tube length being less than the spacing between the abutment means to create a rope slack inside the sleeve and there being clamp means tightly gripped to each end of the elastic tube for capturing the respective abutment means inside the tube, so that applying tension to the rope ends causes the abutment means to engage the clamp means to cause tension on the elastic tube to stretch it and thereby impart elastic qualities to the tie down.

According to a fourth aspect of the present invention, there is provided a rope adjustment device, characterised by a clip having a longitudinally extending flat plate portion with two longitudinally and laterally spaced holes through the plate portion and having parallel axes, the device having an upturned longitudinal flange and a spring finger joined to the longitudinal flange and projecting transversely over said plate portion to capture a rope therein and co-operating with said flange to confine said rope longitudinally on said plate.

For a better understanding of the invention and to show how the same may be carried into effect, reference will now be made, by way of example, to the accompanying drawings, in which:-

Figure 1 is a side view of a first form of elastic tie down in operation yieldably to retain a first member to a second member,

Figure 2 is a side view partly in cross-section, taken through an elastic sleeve of the tie down when in its relaxed condition,

Figure 3 is a view similar to Figure 2 but showing the elastic sleeve in its stretched, operative condition,

Figure 4 is a perspective view of a shortening clip of the elastic tie down,

Figure 5 is a cross-sectional view taken along line 5-5 of Figure 4,

Figure 6 is a cross-sectional view similar to Figure 2 but showing a second form of tie down,

Figure 7 is a longitudinal cross-sectional view of a third form of elastic tie down in its relaxed condition,

Figure 8 is a view of the tie down of Figure 7 in its working condition,

Figures 9, 10 and 11 illustrate yet further modifications which the tie down can be given, and

Figure 12 is a view taken along line 12-12 of Figure 11.

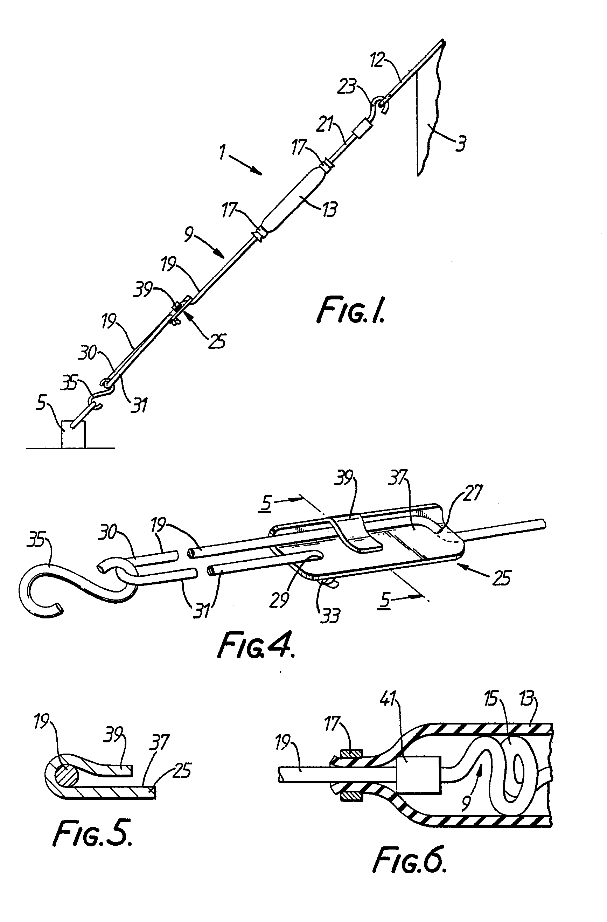

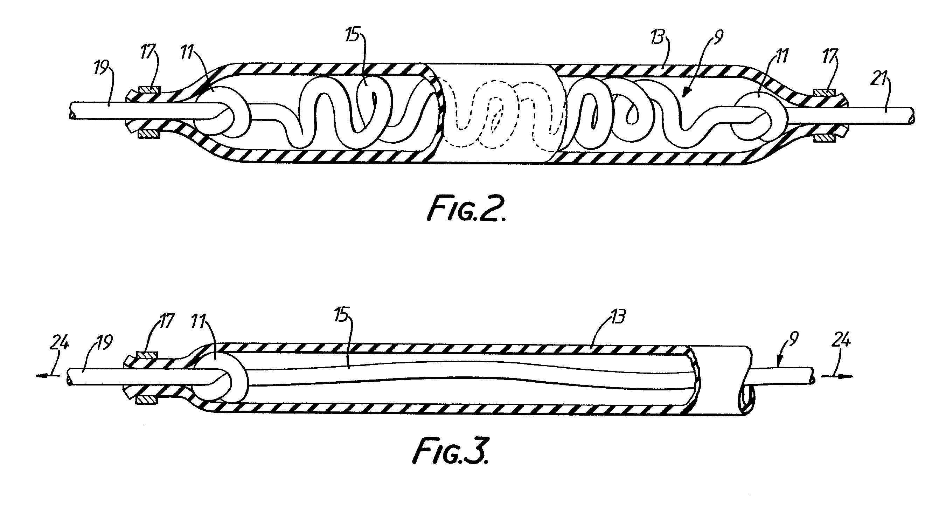

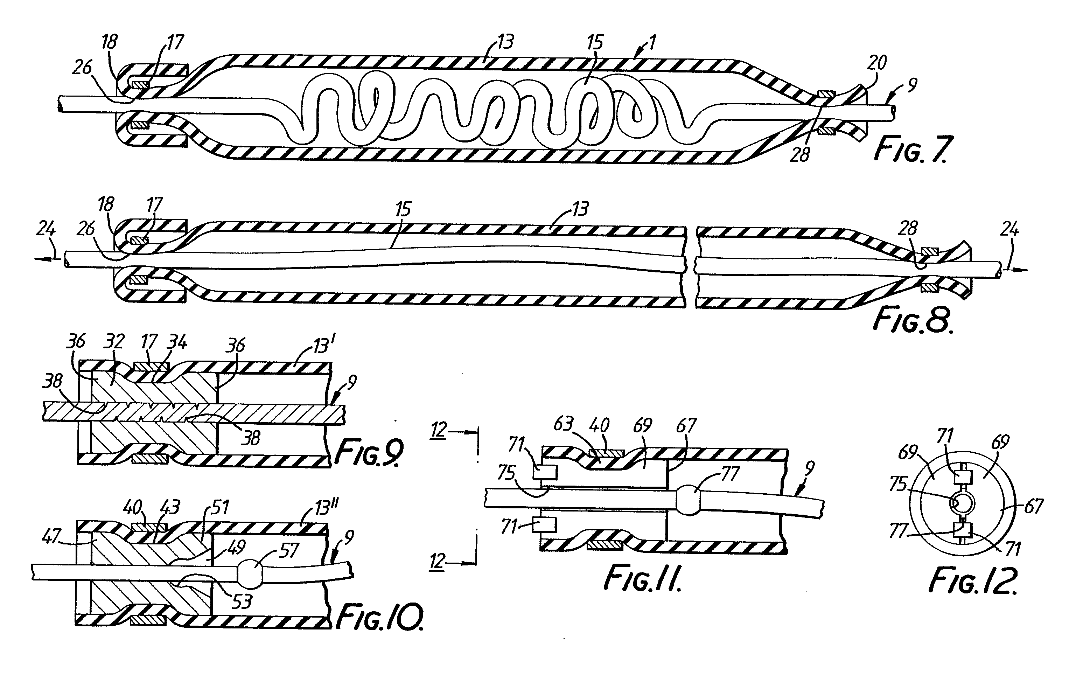

Referring to Figure 1, an elastic tie down 1 is illustrated which is particularly useful for yieldably restraining a first member 3 against movement away from a second member 5. However, it will be understood that the invention is not limited to restraining applications. Normally, one of the members 3 or 5 is relatively small and light compared with the other but it will also be appreciated that the tie down need not be for members of unequal sizes.

The elastic tie down 1 includes an elongate flexible string or rope 9 of any suitable inelastic material.

Referring to Figure 2, a pair of enlargements, such as knots 11 are formed in the rope 9. A sleeve 13 of elastic material is slid over the rope. The length of the sleeve 13 is preferably about 3 to 4 inches (7.5 - 10.00 cm), and the distance between the two knots is greater than the length of the relaxed sleeve to provide a rope slack portion 15. The sleeve is positioned over the rope such that the two knots and the rope slack portion 15 between the knots lie within the sleeve. Both sleeve ends are then crimped tightly over the rope, as with split rings 17. As a result, the knots 11 and slack 15 are captured inside the sleeve, and the rope is divided into a first free end 19 and a second free end 21 that extend in opposite directions from the sleeve with the knots serving as spaced abutment means in the sleeve. To aid the tie down 1 grip a member 3, a conventional hook 23 is fastened to the free end 21..A line 12 extends from the hook 23 to the member 3.

Referring to Figure 3, arrows 24 represent a tension applied to the rope ends 19 and 21. Because the knots 11 are captured within the sleeve 13, the sleeve stretches and the slack 15 is taken up.

The distance between the knots limits the amount of stretch to prevent overstretching or breaking. The preferred material for the sleeve is a strong surgical tubing. Surgical tubing having an outer diameter of about .68 inches (18 mm) and a wall thickness of about .09 inches (3 mm) gives satisfactory results. Tie downs that may be used extensively outdoors preferably have sleeves made from a material that is resistant to ultra-violet rays. The rope could be a wire rope.

Further, the overall length of the elastic tie down 1 is easily adjustable without affecting the tie down elastic properties. Adjustability is provided by means of a flat clip plate 25 having laterally and longitudinally spaced holes 27 and 29 (see Figure 4). The rope end 19 passes through the hole 27 and is turned back to form a loop 30, thus creating a rope running end 31. The running end 31 is fastened to the clip, as by means of the hole 29. For example, the running end 31 may pass through the hole 29 and terminate in a knot 33. In the illustrated construction, the loop 30 passes slidably through the eye of a hook 35. Sliding the clip along the end 19 varies the size of the loop 30 and thereby adjusts the length between the hooks 23 and 35 independently of any tension in the tie down. The lateral spacing between the holes 27 and 29 allows the rope ends 19 and 31 to lie neatly side-by-side. The longitudinal spacing between the clip holes increases the binding action of the clip on the rope. To hold the second running end neatly adjacent the clip flat surface 37, the clip preferably is fabricated with a spring finger or bent-over tab 39. As best shown in Figure 5, the clip tab 39 is formed to permit free longitudinal sliding of the clip along the end 19, but generally to prevent lateral rope movement relative to the clip surface 37 or to the running end 31. With tension exerted between the two hooks, the clip 25 is firmly held in place on the rope. With tension removed, the clip is easily slid in either direction along the rope to increase or decrease the length between the two hooks without affecting the elastic properties of the sleeve.

Referring to Figure 6, a modified embodiment is illustrated in which the slack 15 of the rope 9 is captured within the sleeve 13 by means of enlargements that comprise collapsible collars 41 that are tightly crimped to the rope. The collars 41 function in the same manner as the knots 11 previously described.

In operation, it will be assumed that the member 3, which may be, for example, a tarpaulin, is to be retained to a member 5, which may be a lug on a lorry, by the elastic tie down. The clip 35 is slid along the end 19 until the hooks 23 and 35 are insertable through appropriate openings in the two members. The end 19 adjacent the sleeve is pulled away from the member 3, thereby stretching the sleeve 13, until the desired tension is produced. The clip 25 is slid towards the sleeve along the end 19 until the desired tension remains in the sleeve upon release. The tension may be easily increased or reduced merely by sliding the clip towards or away from the sleeve. Consequently, the tension in the tie down 1 is adjustable without changing the distance between the hooks. Alternatively, the tie down is adjustable between a wide range of distances between the hooks independently of the tie down tension. The clip 25 can be employed without the tie down assembly on any rope if appropriately sized.

It will be appreciated that by pulling the rope ends causes the two knots to stretch the tube, thereby imparting apparent elastic qualities to the rope. In the preferred construction, the distance between the two rope knots is chosen to equal the maximum permissible length of the stretched sleeve. The length of the rope is selected so that the rope will limit the elongation of the rubber prior to failure of the rubber. Hence the length of the rope can be pre-selected to provide a certain elastic tension or pull before the rope takes over. The rope thus provides a safety fall-back element in the event of over-stressing and breakage of the elastic member. The capability of pre-selecting the elastic tension by adjustment of the rope length enables the user of the tie down to determine when the tension or pull is exceeded for certain specified uses. For example, if the specifications for holding helicopter blades of a deck-carried helicopter are 70 lbs. (31.75 kg) of tension, and a tie down is designed for that tension and "bottoms out", i.e., all the slack in the rope is taken up, the user will know that the tie down tension is likely to exceed the specifications.

In the embodiment shown in Figure 7, the radially split metal rings 17 are tightly crimped around the tubular sleeve outer diameter near each of the sleeve ends to grip the rope 9 firmly. Because of the very tight grip produced by the split rings 17 in this case, the rope functions as though it were integrally joined to the two ends of the sleeve and obviates the need for knots in the rope.

The rings 17 are located on the sleeve so as to form tube free ends 18 and 20. In Figure 7, the free end 18 is shown folded back over the associated ring; the same folding is also possible with the free end 20. Folding back the free ends is advantageous because folding provides a smooth surface for the rope 9 at the entrances to the sleeve, thereby minimising rope chafing and wear. In addition, the folded back ends cover and protect the metal rings against damage and the weather, while simultaneously creating a neat appearance for the sleeve 13.

Figure 7 shows the elastic tie down 1 in the relaxed condition. In that condition, there is a predetermined length of rope slack 15 inside the sleeve 13. The amount of slack 15 is governed by the distance along the rope 9 between the points of joining 26, 28 created by the split rings 17. Turning to Figure 8, a force is shown applied to the rope, and, by means of the tight connection made possible by the split metal rings at rope points 26, 28, to the ends of the sleeve 13. Consequently, the sleeve 13 stretches, and the rope slack is taken out of the rope. In Figure 8, approximately the maximum design force is shown applied to the rope, and the slack is almost entirely removed. If the force increases further, the sleeve stretches until the rope slack is entirely removed. Any additional force is then carried entirely by the rope portion 15 that previously existed as slack under less than the maximum design force. Upon reducing or removing the force, the sleeve relaxes to reform the rope slack, as is shown in Figure 7.

Referring to Figure 9, a further modified elastic tie down is illustrated, which comprises an elastic sleeve or tube 13' in conjunction with a pair of longitudinally split annular inserts 32. In Figure 9, only one end of the elastic tube 13', together with one insert 32, is shown, but it will be understood that both ends of the tie down are identical. In the illustrated embodiment, the insert 32 is manufactured with a circumferential depression 34 between the insert ends 36. The inner diameter of the insert is formed with a number of teeth 38 that protrude radially inwardly. Each insert is placed within an end of the elastic tube. The rope 9 with appropriate slack, not shown, is positioned in the desired location within the tube and inserts. Then the metal rings 17 are tightly crimped onto the tube over the inserts and in transverse alignment with their respective depressions 34. As a result, the inserts collapse and the teeth 35 penetrate the rope to create slip-proof connections between the rope and elastic tube.

In a further embodiment, shown in Figure 10, the elastic tie down is capable of firmly joining an elastic member to a rope without requiring split metal rings. In the construction of Figure 10, the elastic tie down comprises two continuous metal rings 40. A longitudinally split bushing 47 is inserted into each end of the elastic tube 13". Each bushing 47 preferably has a circumferential depression 43. A ring 40 is placed over the tube in alignment with the bushing depression 43. Each bushing has a longitudinal passage 49 therethrough that converges from its interior end 51 toward the centre of the bushing. At approximately the longitudinal midpoint of the bushing, the passage 49 is enlarged to define an internal groove 53.

To join the rope 9 tightly to the tube 45, two abutments 57 are crimped tightly onto the rope at a predetermined spacing therealong. The outer surface of each abutment 57 is fabricated to conform to the surface of the bushing internal groove 53. However, the major diameter of the groove is less than the major diameter of the abutment. By way of illustration in Figure 10, the groove 53 is in the form of a hemisphere, and the abutment is a sphere of greater radius. When the elastic tie down 39 is assembled, the ends of the rope 9 are pulled apart until the abutments enter the associated converging passages 49. The abutments force the split bushings apart such that they expand and press the elastic tube 13" tightly against the respective solid rings 40. Continued pulling of the rope ends eventually causes the abutments to seat within the bushing groove. At that point, the rope and bushings are permanently and tightly joined to the elastic tube.

In the embodiment illustrated in Figures 11 and 12, the rope 9 is not tightly joined to the elastic tube. The elastic tie down comprises an elastic tube and the solid metal rings 40. Into each end of the elastic tube is pushed a sleeve 67 having a circumferential depression 63. The sleeve 67 is diametrically split to form two halves 69. The two halves 69 are forced apart by wedges 71 pressed into the gap between the two corresponding halves 69. The wedges force the sleeve halves 69 outwardly against the tube and against the solid ring 40. The two sleeve halves define a longitudinally extending passage 75 through which the rope 9 easily slides. To prevent the rope from pulling out from the sleeves, abutments 77 are tightly crimped to the rope at predetermined locations therealong. In Figure 11, the abutment 77 is shown as being of generally spherical shape, but other geometric configurations are also possible.

It will be appreciated that the elastic member can be made of a hollow, tubular material having a diameter, length, wall thickness and modulus of elasticity suited to the required application. The flexible rope should have adequate tensile strength but minimal column strength.

## Claims

1. A tie down comprising a flexible rope (9) having first and second ends (19, 21) and defining spaced first and second points (11, 57, 77) therealong, and an elastic sleeve or tube (13), characterised in that said elastic sleeve or tube is placed over the rope intermediate the ends thereof and conceals the rope first and second points, the tube length being less than the spacing between the rope first and second points to create a rope slack (15) inside the tube, and there being clamp means (17, 40) surrounding the elastic tube near the opposed ends thereof for crimping the tube onto the rope thereby to capture the rope slack between the tube ends and to create said rope first and second ends extending oppositely from the ends of the tube and having sufficient length to afford connection of the rope ends for rope usage, the arrangement being such that applying tension to the rope ends causes tension on the elastic tube to stretch it and thereby impart elastic qualities to the tie down.

2. A tie down according to claim 1, characterised in that said clamp means comprises a pair of split rings (17) for collapsing over the elastic tube to grip the tube tightly onto the rope.

3. A tie down according to claim 1, characterised in that said clamp means surrounds the elastic tube at predetermined distances from the respective tube ends and a tube portion (18) between one of the clamp means and the nearest tube end (20) is folded back over the clamp means so that a smooth entrance is provided for the rope into the elastic tube and the clamp means is protected from damage.

4. A tie down according to claim 1, characterised by longitudinally split annular inserts (32) installed within the tube at respective ends thereof, the inserts each defining a passage therethrough for receiving the flexible rope so that tightening the clamp means over the tube causes the inserts to collapse on the rope first and second points and thereby tightly to grip the rope to the elastic tube.

5. A tie down according to claim 4, characterised in that each said insert defines a plurality of inwardly directed teeth (38) adapted to penetrate the rope at the first and second points therealong when the clamp means is tightened onto the elastic tube and insert.

6. A tie down according to claim 4 or 5, characterised in that each said insert is formed with a circumferential depression (53) and the clamp means surrounds the elastic tube in transverse alignment with the insert circumferential depression.

7. A tie down according to claim 4, 5 or 6, characterised in that said clamp means comprises a pair of split rings (17) for collapsing over the tube and inserts, to join the tube, inserts and rope tightly to one another.

8. A tie down according to any one of the preceding claims, characterised in that a pair of spaced abutment means (11) are provided on the rope between its ends, said abutment means being encapsulated and concealed by said tube so that applying tension to the rope ends causes said abutment means to cause tension on said tube to stretch and thereby to impart elastic qualities to the tie down.

9. A tie down according to claim 8, characterised in that said abutment means is dimensioned to prevent said rope from being pulled through the crimped opening of said tube.

10. A tie down according to claim 8 or 9, characterised in that said abutment means are not fixably connected to said tube.

11. A tie down according to any one of the preceding claims, further characterised by a clip (25) having a longitudinally extending flat surface (37) for adjusting the length between the two rope ends (19, 21) independently of the tension produced in the tube, the clip (25) having first and second holes (27, 29) with substantially parallel axes through the flat surface (37), the rope second end (21) being fastened to the clip at the second clip hole (29), the first clip hole (27) being adapted slidably to receive the rope intermediate the tube and the second rope end so that a loop (30) is formed in the rope portion extending between the first and second clip holes.

12. A tie down according to claim 11, characterised in that said first and second clip holes (27, 29) are laterally and longitudinally offset, the clip (25) being fabricated with a tab (39) bent laterally over the flat intermediate surface (37) to guide the rope loosely intermediate the tube and the second rope end (21) for permitting longitudinal sliding of the clip along the rope and for generally preventing rope lateral movement with respect to the clip.

13. A tie down according to any one of the preceding claims, characterised in that said elastic tube is made of surgical tubing.

14. A tie down according to any one of the preceding claims, characterised in that said tube has a length of approximately 3 to 4 inches (7.5 - 10.00 cm), an outer diameter of approximately .68 inches (18 mm) and a wall thickness of approximately .09 inches (3 mm).

15. A tie down according to any one of the preceding claims, characterised in that said rope is a wire rope.

16. A tie down according to any one of claims 1 to 10, characterised by a first hook (23) attached to the rope first end (21), a clip (25) having first and second holes (27, 29) with substantially parallel axes through a flat surface (37) thereof, the rope second end (21) being fastened to the clip at the second clip hole (29), the first clip hole (27) being adapted slidably to receive the rope intermediate the tube and the second rope end (19) thereby to form a loop (30) in the rope portion extending between the first and second clip holes; and a second hook (35) slidably received over the loop (30) in the rope portion extending between the first and second clip holes, the distance between the first and second hooks being adjustable by means of the clip independently of the tension in said tube to enable engaging the hooks with a load with the tube in a relaxed condition and to enable stretching the tube and removing the rope slack therein to create a working length between the hooks equal to the length of the rope between the hooks, so that the load is retained only by the rope.

17. An elastic tie down comprising a flexible rope (9) having first and second ends (19, 21) and an elastic tube (13), characterised in that a pair of spaced abutment means (57, 77) is provided on the rope between the two ends, and a pair of longitudinally split annular bushings (36) are placed over the rope between a respective end thereof and the associated abutment means, each bushing having an interior end facing the respective abutment means and defining a passage therethrough that converges from the interior end towards the interior of the bushing, the bushing passage further defining an internal groove (53) adapted to receive the abutment means; said elastic tube (13) being placed over the rope intermediate the rope ends and encapsulating and concealing the bushings and the abutment means, the tube length being less than the spacing between the abutment means to create a rope slack inside the tube; and a pair of rings (40), one ring being placed over the elastic tube in transverse alignment with each bushing so that when the rope first and second ends are forced apart the abutment means enter the respective bushing converging passages to force the bushings outwardly into tight gripping contact with the elastic tube and the abutment means become seated in the respective bushing internal grooves.

18. A tie down according to claim 17, characterised in that each bushing is formed with a circumferential depression (43) and the rings (40) are placed over the elastic tube and split bushings in transverse alignment with the circumferential depressions.

19. An elastic tie down comprising a flexible rope (9) having first and second ends (19, 21) and an elastic tube (13) characterised in that said tube is placed over the rope intermediate the rope ends and the rope comprises a pair of spaced abutment means (57, 77) between its two ends and said elastic tube conceals said abutment means, the tube length being less than the spacing between the abutment means to create a rope slack (15) inside the sleeve and there being clamp means (40) tightly gripped to each end of the elastic tube for capturing the respective abutment means inside the tube, so that applying tension to the rope ends causes the abutment means to engage the clamp means to cause tension on the elastic tube to stretch it and thereby impart elastic qualities to the tie down.

20. A tie down according to claim 19, characterised in that said clamp means comprises bushings (47) inserted into and in tight gripping connection with respective ends of the tube, there being a ring (40) surrounding the tube in transverse alignment with each bushing so that the rope abutment means engages the bushings when tension is applied to the rope first and second ends.

21. A tie down according to claim 20, characterised in that each bushing is formed with a surface for engaging and co-operating with the associated abutment means to force the bushing outwardly into tight gripping contact with the tube and associated ring.

22. A tie down according to claim 20, characterised in that each bushing is longitudinally split and defines a passage (75) therethrough, the passage converging from the end thereof facing the corresponding abutment means towards the interior of the bushing, the bushing passage (75) further defining an internal groove (53) that is adapted to receive the abutment means so that, when tension is applied to the rope first and second ends, the abutment means engage and co-operate with the respective bushing converging passages to force the bushings into tight gripping engagement with the tube and ring and the abutment means is received in the bushing internal grooves.

23. A tie down according to claim 20, characterised in that each bushing is formed with a circular depression (53) and the rings (40) are placed over the elastic tube and split bushings in transverse alignment with the bushing circumferential depressions.

24. A tie down according to claim 19, characterised in that said clamp means comprises an annular sleeve (69) inserted into each end of the tube, a ring (40) surrounding the elastic tube in transverse alignment with each sleeve and wedge means (71) for forcing the sleeve tightly against the tube and respective ring.

25. A tie down according to claim 24, characterised in that each sleeve is formed with a circumferential depression (63) and the rings are placed over the elastic tube and split sleeves in transverse alignment with the associated depressions (63).

26. A tie down according to claim 24 or 25, characterised in that said sleeve is diametrically split to define two sleeve halves, said wedge means being inserted between the halves to force the halves apart and into tight gripping contact with the tube and associated ring.

27. A rope adjustment device, characterised by a clip (25) having a longitudinally extending flat plate portion (37) with two longitudinally and laterally spaced holes (27, 29) through the plate portion and having parallel axes, the device having an upturned longitudinal flange and a spring finger (39) joined to the longitudinal flange and projecting transversely over said plate portion to capture a rope therein and co-operating with said flange to confine said rope longitudinally on said plate.

FIG. I.

FIG. 4.

FIG. 5.

FIG. 6.

FIG.2.

FIG.3.

0 255 281

FIG. 7.

FIG. 8.

FIG. 9.

FIG. 10.

FIG. 11.

FIG. 12.

0 255 281